# EUROPEAN PATENT SPECIFICATION

(11) **EP 2 946 252 B1**
(45) Date of publication and mention of the grant of the patent: **26.08.2020**
(21) Application number: 13701343.9
(22) Date of filing: 16.01.2013
(51) Int. Cl.: G05B 19/05, G05B 11/42, G05B 23/00

(54) **AUTOMATED INPUT SIMULATION FOR SIMULATED PROGRAMMABLE LOGIC CONTROLLER**
AUTOMATISIERTE EINGABESIMULATION FÜR SIMULIERTE SPEICHERPROGRAMMIERBARE STEUERUNGEN
SIMULATION D'ENTRÉE AUTOMATISÉE POUR AUTOMATE PROGRAMMABLE VIRTUEL

(43) Date of publication of application: 25.11.2015
(73) Proprietor: Siemens Aktiengesellschaft, 80333 München (DE)
(72) Inventor: SOUTHERLAND, Derrick, Johnson City, Tennessee 37604 (US); DONG, Yi, 90482 Nürnberg (DE); KINGSLEY, Ryan, Grand Rapids, MI 49512 (US); CORNETT, James W., Bluff City, Tennessee 37618 (US)
(74) Representative: Isarpatent
(86) International application number: PCT/US2013/021688
(87) International publication number: WO 2014/112990

(56) References cited:
- EP-A1- 1 944 663
- WO-A2-2012/134101
- US-A1- 2012 323 350
- PARKER J K: "Programmable logic controller simulation on a microcomputer", COED USA, vol. 10, no. 1, January 1990 (1990-01), pages 9-13, XP8160723, ISSN: 0736-8607
- Da: "analog input simulation", , 1 January 2009 (2009-01-01), pages 1-4, XP055056377, Retrieved from the Internet: URL:http://forum.codesys.com/viewtopic.php ?t=1264 [retrieved on 2013-03-13]

## Description

### BACKGROUND

The present embodiments relate to simulating a programmable logic controller (PLC). PLCs are computing devices specifically designed to interact with the physical world. The interaction is defined by the program that the user creates and loads on the PLC. The program typically uses the state of inputs to decide the state of outputs. Example inputs are temperature sensors, buttons, switches, and human machine interface (HMI) panels. Other inputs include settings for operation of the PLC, such as a temperature value as a set point at which the output is triggered to change in response to an input. Example outputs are control signals for conveyor belts, pumps, fans, and compressors controls.

When creating a program, the user downloads the program to the PLC and checks that the PLC behaves as expected. If the program does not work as intended, the user determines the cause and changes the program (i.e., "debugs"). The debugging is performed on actual PLC hardware. However, it is not always practical to purchase an extra PLC just for debugging purposes. In addition, carrying a PLC for debugging is not always practical (e.g., when working while on an airplane).

PLC simulators provide virtual PLCs that may be used for debug and/or configuration purposes. Simulators run on personal computers (e.g., desktops or laptops) and allow users to debug their program without having an actual PLC. Simulators allow the user to modify an input in order to determine a result in the output. This allows the user to simulate the action of physical inputs at a rate based on the user's ability to enter a change. However, manual changing of the value of the input is time consuming.

To avoid manual changing of the input, a programming interface of the simulator is used. The user may create an external program to manipulate the inputs. However, this approach requires expertise in developing software. The user may instead use a general purpose third party tool designed to automate interactions with graphical desktop software. Such tools may allow the user to automate mouse and keyboard entry to perform repetitive tasks, such as modifying values in a simulator. However, this automation may require expertise using the third party tool and may be time consuming to configure. The user may have to purchase a license to use the third party tool.

PARKER J K: "Programmable logic controller simulation on a microcomputer", shows a method for input simulation in simulating a programmable logic controller of the prior art

### BRIEF SUMMARY

The invention relates to method for automated input simulation in simulating a programmable logic controller according to claim 1, a non-transitory computer readable storage medium according to claim 12 and a system for simulating a programmable logic controller according to claim 15.

By way of introduction, the preferred embodiments described below include methods, systems, instructions, and computer readable media for input simulation in simulating a programmable logic controller. The simulator program itself includes a graphic user interface for the user to configure a sequence of changes in input values. For example, the value of a variable is to be changed at each of multiple times. The sequence is used to simulate the PLC reaction to the changing input in real-time. The output is provided in real-time.

In a first aspect, a method is provided for input simulation in simulating a programmable logic controller. A graphical user interface with sensor and set point input options is generated on a display. A processor receives a sequence of set points, sensor readings, or set points and sensor readings from the input options of the graphical user interface. The sequence includes timing. The processor simulates operation of the programmable logic controller as a function of the sequence. The operation is simulated in real-time based on the timing. The display displays an indication of the operation in real-time during the simulating. The generating, receiving, simulating, and displaying are integrated in a same process.

In a second aspect, a non-transitory computer readable storage medium has stored therein data representing instructions executable by a programmed processor for input simulation in simulating a programmable logic controller. The storage medium includes instructions for activating a simulator of the programmable logic controller, providing simulation inputs as a function of time for the programmable logic controller, the providing of the simulation inputs being part of the simulator, and simulating response of the programmable logic controller over time to the simulation inputs as a function of time.

In a third aspect, a system is provided for simulating a programmable logic controller. A memory is configured by a simulator to store changes in input values at different times for the programmable logic controller. A processor is configured by the same simulator to simulate in real-time reaction of the programmable logic controller to the changes of the input values.

The present invention is defined by the following claims, and nothing in this section should be taken as a limitation on those claims. Further aspects and advantages of the invention are discussed below in conjunction with the preferred embodiments and may be later claimed independently or in combination.

### BRIEF DESCRIPTION OF THE DRAWINGS

The components and the figures are not necessarily to scale, emphasis instead being placed upon illustrating the principles of the invention. Moreover, in the figures, like reference numerals designate corresponding parts throughout the different views.
Figure 1 is a flow chart diagram of one embodiment of a method for simulating a PLC; and
Figure 2 illustrates an example graphic user interface for input of a sequence of input changes for simulating PLC operation;
Figure 3A illustrates an example real-time output simulated for the PLC, and Figure 3B illustrates an example recorded output simulated for the PLC; and
Figure 4 is a block diagram of a system for simulating a PLC.

### DETAILED DESCRIPTION OF THE DRAWINGS AND PRESENTLY PREFERRED EMBODIMENTS

Inputs for PLC simulation are themselves automatically simulated. With manual changes to input values in the simulation, the human may not replicate the speed, precision, and repeatability of hardware inputs or input provided during normal operation of a PLC. By automating the input and providing a graphical user interface (GUI) for user configuration of the inputs, an easy to use mechanism is provided for automating the simulated inputs. The automated input function is integrated into the simulator so that a given program provides both input simulation and simulation of PLC operation based on the inputs. Users may automate simulated inputs in a fast, precise, and repeatable manner without special expertise or third party tools. The timing of changes may be simulated in real-time, providing more realistic modeling of operation of the PLC.

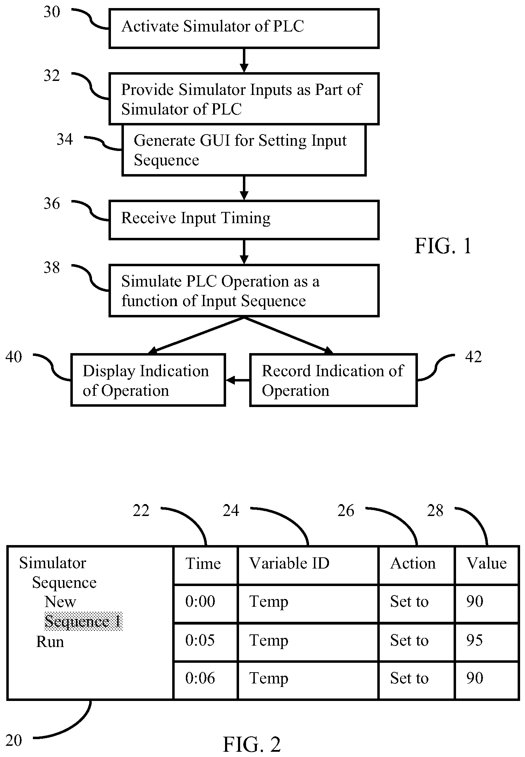

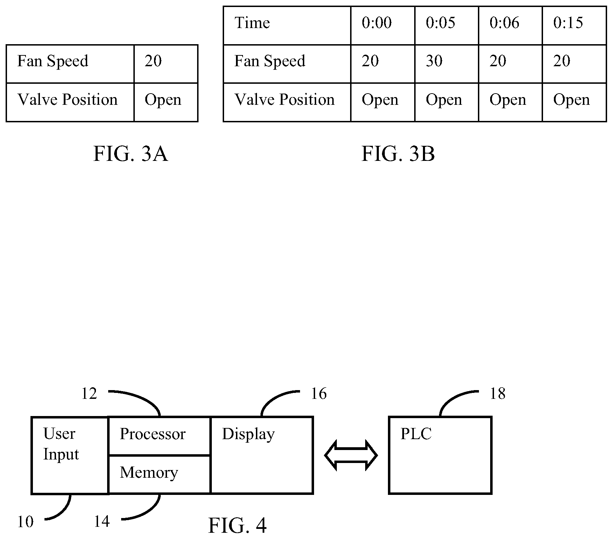

Figure 1 shows a method for input simulation in simulating a programmable logic controller. The method is implemented by the system of Figure 4, a processor, a computer, a workstation, or another system and/or component. The acts are performed in the order shown or other orders. For example, act 34 is performed prior to, after, or as part of act 32. As another example, act 40 is performed prior to, during, and/or after act 42. Additional, different, or fewer acts may be provided. For example, acts 30, 40, and/or 42 are not performed.

The acts of Figure 1 are provided with a single program. The program provides for an input sequence, such as generating a graphic user interface and receiving inputs from a user, as well as the simulation of the PLC and output. The selection, setting, or input of a sequence of inputs for simulating PLC operation are included as part of the simulation. The simulation of PLC operation includes the input simulation. For example, the user interface for creating the input sequence and/or simulating an already established input sequence for input to the PLC simulation are integrated as part of a PLCSIM+ application, STEP7, or other PLC simulator.

In act 30, the PLC simulator is activated. The user selects, clicks, double clicks, or otherwise causes the PLC simulator to run. Rather than immediately simulating operation of the PLC, the activation generates a user interface pursuant to commands for the instance of the program or loads a sequence of inputs to be simulated.

Separate instances are provided for the input simulation and the PLC operation simulation. The graphic user interface and the input simulation are a different process than the PCL operation simulation. These separate processes interact, such as the input simulation feeding input information to the PLC operation simulation. From a user perspective, the simulations operate as one program and/or are seamless. For example, the activation of the PLC operation simulation is provided as part of the graphic user interface also used for configuring the input simulation (e.g., an operation selection displayed with an input simulation selection). A same program using multiple processes may be used. In alternative embodiments, the same instance or unique thread includes simulation of inputs and simulation of PLC operation. A same process or series of instructions in a same program are used to both receive an input sequence and to use the input sequence for simulation PLC operation. The program, application, or simulator instance may include calls to one or more sub-routines or other applications, but coordinates both input and operation simulation.

With the input simulation included in the simulator program, activation presents input simulation options to the user. No special tools and no special expertise from the user are needed to create an input sequence and to simulate PLC response to the input sequence. To automate inputs, the user specifies what should happen and when it should happen. In one example, a PLC program controls a cooling fan. The cooling fan speed is based on a temperature measurement from inside a kiln. The program is designed to keep the kiln at a set point of about 90 degrees Celsius through use of the cooling fan. The user selects inputs to simulate overheating within the kiln. Then, the user selects inputs to simulate a return to normal operating temperature. The simulated fan speed output of the PLC is to be determined based on the simulated inputs. The fan should increase speed in response to the overheating and decreases speed in response to the return to normal operating temperature.

Figure 2 shows an example user interface generated in response to activation. A menu structure is provided in a box, tab, or window 20. The menu structure may provide various options, such as a selection for running the PLC simulation. In the example of Figure 2, the options include input sequence options. By navigating to the sequence information (e.g., selecting the "sequence" option), the user may load a stored sequence (e.g., sequence 1) or create a new sequence (e.g., "new"). Other menu structures and/or formats may be provided, such as using selectable icons for the various options. The information in sections 22, 24, 26, and/or 28 may or may not be provided upon initial activation or selection to configure an input sequence to be simulated.

To simulate the kiln overheat scenario, the user creates a "new" sequence in the simulation project or loads an existing sequence for modification. In this sequence, the user specifies what the temperature reading should be at various points in time. Figure 2 illustrates an example of what the "Kiln Overheat" sequence may look like in the PLCSIM+ simulator.

Additional, different, or fewer input or navigation options may be provided, such as including additional stored sequences. Generic, template, or predetermined input sequences may be provided. Other run options or selections may be provided. For example, different PLCs may be simulated, so options to select simulation of a particular PLC are provided.

In act 32, simulation inputs are provided. The simulator allows for input of simulated inputs. The simulated inputs are provided from a user interface, such as the user inputting settings. Additionally or alternatively, the inputs are provided from memory, such as settings being stored in a file. Receipt of transmission or other input source may be used.

The simulation inputs are provided as part of the simulator. The inputs are appropriate for the PLC being simulated. The types, format, settings (e.g., values), and/or timing is based on the PLC being simulated. Different PLCs have different functionality, so the inputs that may be used may be different. Some PLCs may accept the same inputs.

In act 34, a graphic user interface is generated for providing simulation inputs. Options, such as a menu, icons, browsing, file identification, or other graphic user interface components, are presented to the user or provided for user input on a display. Using an input device (e.g., touch screen, mouse, trackball, keyboard, or touch pad), the user interacts with the simulator using the input options.

In the example of Figure 2, simulation inputs are provided by the menu 20. The user selects a simulator, such as selecting a PLC to be simulated, as one input option. The user then selects the sequence as another input option to provision simulator inputs. Figure 2 shows selection of a previous sequence of simulated inputs, so the fields 22, 24, 26, and 28 are populated. If the "new" option were selected, the input of values for these fields may be solicited, such as providing the table without values or providing a sequence of input solicitations to populate the fields. Locations for input of the simulation inputs by the user are provided as input options. The locations may shift over time, such as generating a pop-up for one or more settings that are then ported to the table. Alternatively, the user enters values or selects options from a drop down for each of the fields directly into the table.

Any type of input information may be provided. For example, the graphical user interface is generated with input options for the simulation inputs. The displayed input options are for sensors, set points, and/or user settings. The PLC is connected with sensors and receives set points or other operation parameters from a user or controller, so the input options include simulation inputs for these parameters. For example, the input options include a graphical user interface component for assigning sensor measurements. The user may indicate a value of the sensor measurement. Figure 2 shows an example input option for sensor measurement as the value field 28. As another example, the input options include a graphical user interface component for assigning a set point. The user may indicate a value of the set point, such as setting a temperature to trigger heating or cooling measures by the PLC. Other types of inputs (e.g., user panel or switch settings) may be modeled, so input options may be provided for these other types of inputs.

Other information may be provided with the locations for sensor, set point or other input options. In the example of Figure 2, the time field 22, variable identifier field 24 (e.g., set point or sensor identification), value field 28, and action field 26 are displayed at different locations for input, change, or confirmation by the user. The user selects a particular input to be simulated based on the variable identification field 24. The identification may be a user assigned name or may be a coded or logic assigned name (e.g., port name). Both types of identification may be used.

The type of change associated with the variable is selected for the action field 26. Any type of change may be provided, such as setting or changing the value of the input variable. The types of changes may be specific to the type of input and/or the PLC being simulated.

The value for the input is selected (e.g., selecting a drop down or entering a value) by the user. The value field 28 is populated. The value represents the sensor or set point value to be used for simulating the input. The value may be limited based on the selected PLC, identification and/or action.

The time for the action to occur is selected by the user. The time field 22 is populated. The time represents when the action associated with the identified variable is to occur. The time value may be limited based on the selected PLC, identification, and/or action.

The user enters, changes, or confirms correct setting of the inputs to be simulated. The locations of the input options are checked or used to enter the information. The user progresses through the table to provide a desired sequence. Each row is associated with a change in the input. Other formats than rows or tables may be used, such as a sequence of windows or pop-up boxes.

Shortcuts may be provided, such as presenting default information at the input locations. In one embodiment, macros or other options are available to populate multiple changes. For example, the user may desire to simulate the input varying cyclically. Rather than requiring the user to separately input each change in the input options, the user selects a cyclical value. The action may include a cyclic change option. A field for frequency may be presented as well as the two values between which the input is to vary.

Figure 2 shows input simulation for one variable. The sequence may include changes to values for multiple variables at a same or different time. For example, readings from different sensors are to be simulated as changing in any order or at a same time.

The sequence of changes of values to be simulated is programmed or loaded. Where simulated input sequence does not include one or more values for one or more sensors, user inputs, and/or set points for the PLC, default values are provided. Alternatively, the graphical user interface solicits selection of input options for all the variables used by the PLC. If the user attempts to run the simulation or complete the sequence without indicating a needed value, the missing information may be highlighted or the user otherwise solicited to provide the missing information.

Other checks may be performed. Various relationships between values, variables, and/or time may be enforced. For example, the rate of change may be limited based on physical models or PLC capability.

In addition to setting the inputs for the input simulation, the user may configure the output of the PLC simulation and/or the layout or format of the input simulation. For example, the user selects one or more output values calculated by the PLC simulator for output.

In act 36, a sequence is received. The input options of the graphical user interface are used by the user to input information. The input information is received by the processor, memory, or simulator. The information is received in any format, such as an excel or other spreadsheet format. The sequence may be received from other sources, such as a file transfer.

The sequence is of set points, sensor readings, user input settings, combinations thereof, or other inputs. For example, the sequence includes just sensor readings for only one sensor. Alternatively, the sequence includes just sensor readings for multiple sensors. As another example, the sequence includes set point values for only one set point. Alternatively, the sequence includes set point values for multiple set points.

The received sequence includes timing information. The times at which different actions or changes in the simulated input occur are included in the sequence. The times when the sensor readings, user inputs, and/or set points change define the sequence of inputs to be simulated.

The sequence may include sensor readings that are cyclical. The cycle may be received, such as receiving an oscillation frequency. Alternatively, the oscillation frequency is used to define a sequence of discrete changes, and the discrete changes are received.

The received sequence of set points, user settings, and/or sensor readings is processed or is stored. The memory location for storage may be based on the PLC being simulated. Some PLCs operate by reading inputs or sensor values from more than one location. For example, the PLC may read a sensor value directly from a wire (i.e., value at the interface with the sensor) or from a memory of the most recent sensor value. The use of memory or a measurement store may avoid repetitive or excessive use of the sensors or communications network. The sensors only transmit changes rather than a current value to the PLC. The memory is used to store the last value and is only updated when a change occurs.

To account for different options for input, the received sequence may be stored in a separate location. The separate location is different than the memory location or addresses used for the measurement store in the PLC simulation. This separate storage location is then used to emulate the sensors transmitting changes when appropriate and/or as the line values at a given time. A call to an interface for a current sensor value is routed to this separate memory to identify the current value based on the time. A call to the measurement store is routed to the separate memory or the input simulation transmits changes to the measurement store when appropriate.

For real-time simulation, the sequence is buffered in a memory as a job. The set points, sensor readings, user settings, or combinations thereof are formatted in time order as a file, packet, or group of data. The job is implemented as a simulation of inputs from the buffer to provide for accurate timing. The job sequences through the changes based on a clock or time to simulate the input as an output from the buffer. Alternatively, the sequence is stored in a memory for reading as performed by the PLC simulator. The input simulation simulates input from the sensors or simulates inputs having been received from the sensors.

In act 38, the operation of the PLC is simulated. The processor runs the simulator. In one embodiment, the simulator is based on the PLCSIM+ for simulating operation of a given PLC. Other simulators may be incorporated, such as the STEP7 simulator. A processor in a computer or other device different than the PLC simulates operation of the PLC. Alternatively, a PLC is used to simulate operation while not being connected for actual operation.

For simulating operation of a given PLC, the firmware for that PLC is emulated. The firmware is converted into a code set or instructions operable with the operating system of the processor or computer. Since different PLCs have different capabilities and associated firmware, the conversion of the firmware incorporates the operation specific to the PLC. In alternative embodiments, the simulator is programmed manually or other process is used to provide the simulator for a specific PLC. The simulator is programmed prior to use or distribution, such as by a manufacturer.

The simulator simulates operation of the PLC in response to user activation. For example, the user selects the "run" menu item in the user interface field 20. Other activation may be provided, such as activating in response to an indication of completion of setting the input sequence.

The simulation is performed as a function of the input sequence. When the simulation of PLC operation is performed, the inputs to the simulation are changed or controlled based on the input sequence. The response of the PLC to different inputs over time is simulated. For example, the buffered input sequence is fed to the simulation as inputs to emulate actual operation. The set points, sensor readings, and/or other inputs are altered and/or provided. The simulator simulates reading from wires and/or from the measurement store as appropriate for the PLC being simulated. The stored locations of the sequence are accessed and/or the values of the sequence are fed to the simulation of operation of the PLC. The PLC is simulated as obtaining the simulation inputs as appropriate for the PLC, such as from wire reads or from a memory store.

The inputs are simulated as a function of time. The alterations occur in the order established by the timing. In one embodiment, the inputs and PLC operation are simulated in real-time. Where a change is to occur after five seconds, the simulation waits five seconds to implement the change and determine the response. In other embodiments, the simulation is performed not in real-time, such as calculating the response as rapidly as possible given the processor and/or other hardware performing the simulation.

In the example of Figure 2, upon "playing" the sequence, the kiln temperature is set to 90 degrees. After running for 5 seconds, the sequence then sets the kiln temperature to 95 degrees. One second later, the temperature is lowered back to 90 degrees. The sequence returns to the "stopped" state 15 seconds after beginning.

Other input sequences and response may be simulated. For example, the operation of the PLC in response to a cyclical or oscillating input may be simulated. The simulation occurs over any set or predetermined number of cycles, such as ten cycles. The simulation runs until stopped, such as in response to a stop simulation action of the input sequence.

The simulation calculates the reaction of the PLC to the simulated input or inputs. The PLC operates based on set points, sensor readings, user settings, and/or other inputs. The simulator determines the PLC response to changes in one or more inputs over time. The output of the PLC, such as a control output, is determined as the response. In the kiln example, the fan speed control signal is determined. The signal output on a wire to the controlled device is determined. Alternatively, the signal used to establish or set the output on the wire is determined.

More than one output may be determined. The output determined may be selected by the user. Alternatively, all outputs are calculated whether displayed or not.

The output or calculated value or values are indicators of the operation of the PLC. A lack of a value or calculation may indicate a bug. An unexpected value may indicate a bug. An expected value may indicate desired operation. Rather than or in addition to be used for debugging, the simulation may be used to refine or establish the desired operation of the PLC, such as for determining a desired set point or for altering a level or rate of response to inputs.

In act 42, the indication is recorded. The value is stored for later access. Since the indication may change over time due to change in inputs, the indication at different times is recorded. The indication is recorded at regular or periodic times or only changes in the indication are recorded.

The values for more than one indication may be recorded. Act 42 may be optional.

In act 40, the indication is displayed on a display (e.g., monitor, printer, or other display device). The value of the current indication is output to the user. Figure 3A shows an example. The value of the fan speed is output. Additional indications may be output, such as a valve position.

The displayed indication is of the current value. Where the input simulation is performed in real-time, the resulting output determined by the PLC simulator is also in real-time. The user may monitor the output over time, even when the output is not recorded. As the set points and/or input sensor values change, the output may or may not change. The results are output for the user. For example, the user observes the fan speed using an output of the PLC simulation, such as using a watch table or any output features of PLCSIM+ or STEP7. The user observes the indication (e.g., fan speed) while the input sequence is playing to ensure that the output indication changes as expected.

In one embodiment, the recording of act 42 is used for the display of the indication in act 40. As an alternative to or in addition to outputting a current value in real-time, past values for the same sequence and/or other input sequences are shown. For example, a graph of a value over time is displayed. The graph may include a trace for the value from a different sequence in the same time frame for comparison. In additional or as an alternative to a graph, a table or chart is provided. The changes are displayed. Figure 3B shows an example where each row represents the output values at each time of change. The value relative to the timing of the input sequence may be used. Alternatively, the value relative to the time at which the PLC simulation changes the output is used.

Other information may be displayed. For example, values not associated with change due to the simulated input sequence are displayed to confirm to the user that there is no change. Information associated with the value, such as the time of occurrence of the value, may be displayed. Statistical information associated with the value may be changed. The display may include a representation of the input sequence as well as the output indications for comparison. Differences between different input sequences and corresponding differences between outputs may be displayed or highlighted to assist the user in understanding the effects of different inputs.

The recorded information is displayed in real-time with the simulation of the PLC operation. For example, a current value and past values are displayed. Alternatively or additionally, the values recorded from a previously performed or completed simulation are displayed for review.

Figure 4 shows one embodiment of a system for simulating a programmable logic controller. The system includes a user input 10, processor 12, memory 14, and display 16. Additional, different or fewer components may be provided, such as including a graphics processing unit or network interface. The system implements the method of Figure 1 or another method. The system provides for programming or setting a sequence of inputs to a simulated PLC, simulating inputs to the simulated PLC, and/or simulating operation of the simulated PLC in response to the inputs.

The system is a computer or workstation. The PLC 18 is shown to represent the device being simulated by the system. The programmable logic controller 18 is a panel, computer, processor, circuit, or other programmable devices for automation of electromechanical, chemical, pneumatic, fluid, electrical, mechanical, or other processes. For example, the programmable logic controller 18 is control machinery on an assembly line, heating-ventilation-air conditioning (HVAC), refinery flow, mixing, or other devices or processes. The programmable logic controller outputs control and/or information (e.g., status and/or event data) in response to input conditions within a limited time.

For operating, the programmable logic controller 18 connects with one or more sensors and/or one or more actuators. The sensors may be temperature, pressure, rate, current, voltage, inductance, capacitance, chemical, flow, or other sensors. Any number of sensors may be used. The actuators may be magnetic, electric, pneumatic, or other devices for altering, moving, drilling, welding, mixing, spinning, changing or otherwise actuating. The sensors and actuators communicate with or are field devices for control and measuring.

The programmable logic controller is configured to operate based on programming. The programming is provided as a set of instructions, firmware, and/or other software or hardware. The actions to perform and/or the set points for when to perform the actions may be programmed. The work flow or series of actions may be configured. Based on input at a user interface and/or a loaded project, the programmable logic controller 18 is configured to control one or more aspects of the industrial process in response to triggers and/or reported events associated with the industrial process.

To simulate the programmable logic controller 18, the memory is provided to store the simulator, the project, a simulated input sequence, and/or output values. The memory 14 is a graphics processing memory, video random access memory, system memory, random access memory, cache memory, hard drive, optical media, magnetic media, flash drive, buffer, database, combinations thereof, or other now known or later developed memory device for storing data. The memory 14 stores one or more datasets representing sensor readings, set points, and/or actuator status. The memory 14 may store default values, an input sequence, calculated values, or other information for simulating input and output of the programmable logic controller 18.

The memory also stores instructions for a graphic user interface to control simulation, for simulating input, and/or for simulating operation of the programmable logic controller 18. The memory 14 or other memory is a non-transitory computer readable storage medium storing data representing instructions executable by the programmed processor 12 for input simulation and for simulating a programmable logic controller. The instructions for implementing the processes, methods and/or techniques discussed herein are provided on computer-readable storage media or memories, such as a cache, buffer, RAM, removable media, hard drive or other computer readable storage media. Computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code and the like, operating alone, or in combination. Likewise, processing strategies may include multiprocessing, multitasking, parallel processing, and the like.

In one embodiment, the instructions are stored on a removable media device for reading by local or remote systems. In other embodiments, the instructions are stored in a remote location for transfer through a computer network or over telephone lines. In yet other embodiments, the instructions are stored within a given computer, CPU, GPU, or system.

The memory 14 may be configured by the simulator. The simulator may assign one or more address ranges for specific purposes. For example, a specific address range is used as a buffer to store a job outputting inputs at specific times. The address range is reserved. Alternatively, the memory locations are assigned as needed, such as assigning memory locations to hold input values entered or selected by a user.

The processor 12 is a general processor, central processing unit, control processor, graphics processor, digital signal processor, three-dimensional rendering processor, image processor, application specific integrated circuit, field programmable gate array, digital circuit, analog circuit, combinations thereof, or other now known or later developed device for controlling a graphic user interface, simulating inputs to a PLC, and simulating PLC operation in response to the inputs as one application or program. The processor 12 is a single device or multiple devices operating in serial, parallel, or separately. The processor 12 may be a main processor of a computer, such as a laptop or desktop computer, or may be a processor for handling tasks in a purpose-built system, such as in a programmable logic controller. The processor 12 is configured by software and/or hardware.

The processor 12 is configured to simulate programmable logic controller 18 operation based on simulated input. The same program or instance of an application is used to create and/or select a sequence of input events to be included in the simulation of inputs. Any process or interface may be used to guide or allow the identification of the input sequence.

The processor 12, still as part of the same program, is configured to apply the input sequence for simulating operation. For example, user programs are stored as STEP7 projects. Any STEP7 project that is valid for a given PLC type may be downloaded to the simulated PLC.

The sequence is emulated being input in real-time. The responsive operation of the simulated programmable logic controller 18 to the simulated input is provided. The simulation of operation is performed in real-time with the simulation of inputs. The output is also provided in real-time, but may be recorded for later output. As the input values change, the reaction of the simulated PLC may or may not change. The reaction is simulated.

The user input 10 is a mouse, touch screen, trackball, touch pad, keyboard, or other now know or later developed user input device. The user input 10, in conjunction with images on the display 16, provides a graphical user interface for the simulator. The processor 12 is configured to generate the graphical user interface. The user input 10 allows the user to select input sequences, create input sequences, and/or run the PLC simulator.

The display 16 is a monitor, LCD, plasma, projector, printer, or other display device. The display 16 provides images with locations associated with input options. The processor 12 generates the image for soliciting or providing for establishing a sequence of input events. The display 16 also outputs simulation information, such as indications of the control signals generated by the simulation of operation of the programmable logic controller 18.

## Claims

1. A method for automated input simulation in simulating a programmable logic controller, PLC, the method comprising:
a) generating (34), on a display, a graphical user interface with sensor and set point input options;
b) receiving (36), with a processor (12), a time sequence of set points, sensor readings, or set points and sensor readings from the input options of the graphical user interface, the time sequence including timing;
c) simulating (38), with the processor (12), operation of the programmable logic controller as a function of the time sequence, the operation simulated in real-time based on the timing by emulating firmware of the programmable logic controller; and
d) displaying (40), on the display, an indication of the operation in real-time during the simulating (38); wherein
e) the simulation determines the PLC response over time to the changes in one or more simulated inputs of the input time sequence and determines control outputs of the PLC, wherein the time sequence is defined as a sequence of discrete time steps and wherein control output values of the control outputs are determined and displayed at the discrete time steps, wherein a lack of a value or an unexpected value indicates a bug.

2. The method of claim 1 wherein the generating (34), receiving (36), simulating (38), and displaying (40) are seamlessly presented to a user as one program.

3. The method of claim 1 wherein the generating (34), receiving (36), simulating (38), and displaying (40) being integrated in the same process comprises performing the generating (34), receiving (36), simulating (38) and displaying (40) as a unique thread of a program.

4. The method of claim 1 wherein generating (34) comprises displaying (40) the input options as multiple locations, the locations labeled as being for a time, and a value for a variable for the time, or
generating (34) at least one of the input options as the sensor measurement, and wherein receiving (36) comprises receiving (36) the sensor measurement as one of the sensor readings, or
wherein generating (34) comprises generating (34) at least one of the input options as a set point assignment, and wherein receiving (36) comprises receiving (36) the set point assignment as one of the set points.

5. The method of claim 1 wherein receiving (36) comprises receiving (36) the timing as times for changes in the set points, sensor readings, or set points and sensor readings, the times set by a user.

6. The method of claim 1 wherein simulating (38) comprises simulating (38), with the processor (12) of a computer, firmware specific to a type of the programmable logic controller, or
simulating (38) a reaction of the programmable logic controller to the sequence of the set points, the sensor readings, or the set points and the sensor readings, or
altering the set points, the sensor readings, or the set points and the sensor readings as a function of the timing and determining a value calculated, with the processor (12), simulating (38) the operation of the programmable logic controller.

7. The method of claim 1 wherein receiving (36) comprises storing the set points, the sensor readings, or the set points and the sensor readings in a first section of a memory (14), and wherein simulating (38) comprises simulating (38) reading from wires and reading from a measurement store, the reading from the wires accessing the first section of the memory (14), the first section separate than the simulation of the measurement store.

8. The method of claim 1 wherein receiving (36) comprises buffering the set points, the sensor readings, or the set points and the sensor readings as a job, and wherein simulating (38) comprises simulating (38) from the buffered job.

9. The method of claim 1 wherein receiving (36) comprises receiving (36) the sensor readings as an oscillation at a frequency, and wherein simulating (38) comprises simulating (38) the operation in response to the oscillation.

10. The method of claim 1 wherein displaying (40) comprises displaying (40) different values of a variable responsive to the set points, the sensor readings, or the set points and the sensor readings in real-time.

11. The method of claim 1 further comprising recording (42) the indication over time during the simulating (38) and outputting the indication over time in a summary table after the simulating (38).

12. In a non-transitory computer readable storage medium having stored therein data representing instructions executable by a programmed processor (12) for automated input simulation in simulating (38) a programmable logic controller, the storage medium comprising instructions for:
a) activating (30) a simulator of the programmable logic controller;
b) providing (32) simulation inputs as a function of time for the programmable logic controller, the providing of the simulation inputs being part of the simulator; and
c) simulating (38) response of the programmable logic controller over time to the simulation inputs as a function of time by emulating firmware of the programmable logic controller; wherein the input simulation comprises:
generating, on a display, a graphical user interface with sensor and set point input options including a sensor measurement relating to the PLC being simulated;
receiving, with a processor, a sequence of set points, sensor readings, or set points and sensor readings from the input options of the graphical user interface including a value of the sensor measurement of the PLC being simulated, the sequence including timing;
simulating, with the processor, operation of the programmable logic controller as a function of the sequence, the operation simulated in real-time; and
displaying, on the display, an indication of the operation in real-time during the simulating; wherein
the simulation determines the PLC response over time to the changes in one or more simulated inputs of the input time sequence and determines control outputs of the PLC, wherein the time sequence is defined as a sequence of discrete time steps and wherein control output values of the control outputs are determined and displayed at the discrete time steps, wherein a lack of a value or an unexpected value indicates a bug.

13. The non-transitory computer readable storage medium of claim 12 wherein providing (32) comprises generating (34) a graphical user interface with locations for input of the inputs by a user, and wherein the providing and the simulating (38) are performed as a same instance of the simulator.

14. The non-transitory computer readable storage medium of claim 12 wherein simulating (38) comprises simulating (38) the response in real-time or the programmable logic controller obtaining the simulation inputs from reading wires and from reading an input store.

15. A system for simulating (38) a programmable logic controller, the system comprising:
a memory (14) configured by a simulator to store changes in input values at different times for the programmable logic controller; and
a processor (12) configured by the same simulator to simulate in real-time reaction of the programmable logic controller to the changes of the input values by emulating firmware of the programmable logic controller, the processor (12) for carrying out the following steps:
a) activating (30) a simulator of the programmable logic controller;
b) providing (32) simulation inputs as a function of time for the programmable logic controller, the providing of the simulation inputs being part of the simulator; and
c) simulating (38) response of the programmable logic controller over time to the simulation inputs as a function of time by emulating firmware of the programmable logic controller; wherein the input simulation comprises:
generating, on a display, a graphical user interface with sensor and set point input options including a sensor measurement relating to the PLC being simulated;
receiving, with a processor, a sequence of set points, sensor readings, or set points and sensor readings from the input options of the graphical user interface including a value of the sensor measurement of the PLC being simulated, the sequence including timing;
simulating, with the processor, operation of the programmable logic controller as a function of the sequence, the operation simulated in real-time; and
displaying, on the display, an indication of the operation in real-time during the simulating; wherein
the simulation determines the PLC response over time to the changes in one or more simulated inputs of the input time sequence and determines control outputs of the PLC, wherein the time sequence is defined as a sequence of discrete time steps and wherein control output values of the control outputs are determined and displayed at the discrete time steps, wherein a lack of a value or an unexpected value indicates a bug.

## Patentansprüche

1. Verfahren zur automatisierten Eingabesimulation beim Simulieren einer programmierbaren Logiksteuerung, PLC, wobei das Verfahren Folgendes umfasst:
a) Erzeugen (34) einer grafischen Benutzerschnittstelle mit Sensor- und Sollwerteingabeoptionen auf einer Anzeige,
b) Empfangen (36) einer Zeitsequenz von Sollwerten, Sensormesswerten oder Sollwerten und Sensormesswerten von den Eingabeoptionen der grafischen Benutzerschnittstelle mit einem Prozessor (12), wobei die Zeitsequenz eine Zeitplanung beinhaltet,
c) Simulieren (38) eines Betriebes der programmierbaren Logiksteuerung als eine Funktion der Zeitsequenz mit dem Prozessor (12), wobei der Betrieb basierend auf der Zeitplanung durch Emulieren von Firmware der programmierbaren Logiksteuerung in Echtzeit simuliert wird, und
d) Anzeigen (40) einer Angabe des Betriebes in Echtzeit während des Simulierens (38) auf der Anzeige, wobei
e) die Simulation die PLC-Reaktion im Zeitverlauf auf die Veränderungen bei einer oder mehreren simulierten Eingaben der Eingabezeitsequenz bestimmt und Steuerausgaben der PLC bestimmt, wobei die Zeitsequenz als eine Sequenz einzelner Zeitschritte definiert ist und wobei Steuerungsausgabewerte der Steuerungsausgaben in den einzelnen Zeitschritten bestimmt und angezeigt werden, wobei ein Fehlen eines Wertes oder ein unerwarteter Wert eine Störung angibt.

2. Verfahren nach Anspruch 1, wobei das Erzeugen (34), Empfangen (36), Simulieren (38) und Anzeigen (40) einem Benutzer nahtlos als ein Programm präsentiert werden.

3. Verfahren nach Anspruch 1, wobei das Integriertsein des Erzeugens (34), Empfangens (36), Simulierens (38) und Anzeigens (40) in den gleichen Prozess das Durchführen des Erzeugens (34), Empfangens (36), Simulierens (38) und Anzeigens (40) als einen eindeutigen Thread eines Programms umfasst.

4. Verfahren nach Anspruch 1, wobei das Erzeugen (34) umfasst: das Anzeigen (40) der Eingabeoptionen als mehrere Stellen, wobei die Stellen für eine Zeit und ein Wert für eine Variable für die Zeit bezeichnet sind, oder
das Erzeugen (34) mindestens einer der Eingabeoptionen als die Sensormessung, und wobei das Empfangen (36) das Empfangen (36) der Sensormessung als einen der Sensormesswerte umfasst, oder wobei das Erzeugen (34) das Erzeugen (34) mindestens einer der Eingabeoptionen als eine Sollwertzuordnung umfasst und wobei das Empfangen (36) das Empfangen (36) der Sollwertzuordnung als einen der Sollwerte umfasst.

5. Verfahren nach Anspruch 1, wobei das Empfangen (36) das Empfangen (36) der Zeitplanung als Zeitpunkte für Veränderungen der Sollwerte, Sensormesswerte oder Sollwerte und Sensormesswerte umfasst, wobei die Zeitpunkte von einem Benutzer eingestellt werden.

6. Verfahren nach Anspruch 1, wobei das Simulieren (38) umfasst: das Simulieren (38) von Firmware, die für eine Art der programmierbaren Logiksteuerung spezifisch ist, mit dem Prozessor (12) eines Computers oder
das Simulieren (38) einer Reaktion der programmierbaren Logiksteuerung auf die Sequenz der Sollwerte, der Sensormesswerte oder der Sollwerte und der Sensormesswerte oder Ändern der Sollwerte, der Sensormesswerte oder der Sollwerte und der Sensormesswerte als eine Funktion der Zeitplanung und Bestimmen eines Wertes, der mit dem Prozessor (12) berechnet wird und den Betrieb der programmierbaren Logiksteuerung simuliert (38).

7. Verfahren nach Anspruch 1, wobei das Empfangen (36) das Speichern der Sollwerte, der Sensormesswerte oder der Sollwerte und der Sensormesswerte in einem ersten Abschnitt eines Speichers (14) umfasst und wobei das Simulieren (38) das Simulieren (38) des Ablesens von Messwerten von Drähten und Ablesens von Messwerten von einem Messwertspeicher umfasst, wobei das Ablesen von Messwerten von den Drähten auf den ersten Abschnitt des Speichers (14) zugreift, wobei der erste Abschnitt separat von der Simulation des Messwertspeichers ist.

8. Verfahren nach Anspruch 1, wobei das Empfangen (36) das Zwischenspeichern der Sollwerte, der Sensormesswerte oder der Sollwerte und der Sensormesswerte als eine Aufgabe umfasst und wobei das Simulieren (38) das Simulieren (38) von der zwischengespeicherten Aufgabe umfasst.

9. Verfahren nach Anspruch 1, wobei das Empfangen (36) das Empfangen (36) der Sensormesswerte als eine Schwingung auf einer Frequenz umfasst und wobei das Simulieren (38) das Simulieren (38) des Betriebes in Reaktion auf die Schwingung umfasst.

10. Verfahren nach Anspruch 1, wobei das Anzeigen (40) das Anzeigen (40) verschiedener Werte einer Variablen in Reaktion auf die Sollwerte, die Sensormesswerte oder die Sollwerte und die Sensormesswerte in Echtzeit umfasst.

11. Verfahren nach Anspruch 1, ferner das Aufzeichnen (42) der Abgabe im Zeitverlauf während des Simulierens (38) und das Ausgeben der Angabe im Zeitverlauf in einer Summierungstabelle nach dem Simulieren (38) umfassend.

12. In einem nicht-flüchtigen computerlesbaren Speichermedium, in dem Daten gespeichert sind, die Befehle darstellen, die von einem programmierten Prozessor (12) für eine automatisierte Eingabesimulation beim Simulieren (38) einer programmierbaren Logiksteuerung ausführbar sind, wobei das Speichermedium Befehle für Folgendes umfasst:
a) Aktivieren (30) eines Simulators der programmierbaren Logiksteuerung,
b) Bereitstellen (32) von Simulationseingaben als eine Funktion der Zeit für die programmierbare Logiksteuerung, wobei das Bereitstellen der Simulationseingaben Teil des Simulators ist, und
c) Simulieren (38) einer Reaktion der programmierbaren Logiksteuerung im Zeitverlauf auf die Simulationseingaben als eine Funktion der Zeit durch Emulieren von Firmware der programmierbaren Logiksteuerung, wobei die Eingabesimulation Folgendes umfasst:
Erzeugen einer grafischen Benutzerschnittstelle mit Sensor- und Sollwerteingabeoptionen, einschließlich einer Sensormessung, die die simulierte PLC betrifft, auf einer Anzeige,
Empfangen einer Sequenz von Sollwerten, Sensormesswerten oder Sollwerten und Sensormesswerten von den Eingabeoptionen der grafischen Benutzerschnittstelle, einschließlich eines Wertes der Sensormessung der simulierten PLC, mit einem Prozessor, wobei die Sequenz eine Zeitplanung beinhaltet,
Simulieren eines Betriebes der programmierbaren Logiksteuerung als eine Funktion der Sequenz mit dem Prozessor, wobei der Betrieb in Echtzeit simuliert wird, und
Anzeigen einer Angabe des Betriebes in Echtzeit während des Simulierens auf der Anzeige, wobei
die Simulation die PLC-Reaktion im Zeitverlauf auf die Veränderungen bei einer oder mehreren simulierten Eingaben der Eingabezeitsequenz bestimmt und Steuerausgaben der PLC bestimmt, wobei die Zeitsequenz als eine Sequenz einzelner Zeitschritte definiert ist und wobei Steuerungsausgabewerte der Steuerungsausgaben in den einzelnen Zeitschritten bestimmt und angezeigt werden, wobei ein Fehlen eines Wertes oder ein unerwarteter Wert eine Störung angibt.

13. Nicht-flüchtiges computerlesbares Speichermedium nach Anspruch 12, wobei das Bereitstellen (32) das Erzeugen (34) einer grafischen Benutzerschnittstelle mit Stellen für die Eingabe der Eingaben durch einen Benutzer umfasst und wobei das Bereitstellen und das Simulieren (38) als gleiche Instanz des Simulators durchgeführt werden.

14. Nicht-flüchtiges computerlesbares Speichermedium nach Anspruch 12, wobei das Simulieren (38) das Simulieren (38) der Reaktion in Echtzeit umfasst oder das Gewinnen der Simulationseingaben aus dem Ablesen von Messwerten von Drähten und aus dem Ablesen von Messwerten eines Eingabespeichers durch die programmierbare Logiksteuerung umfasst.

15. System zum Simulieren (38) einer programmierbaren Logiksteuerung, wobei das System Folgendes umfasst:
einen Speicher (14), der von einem Simulator dafür konfiguriert ist, Veränderungen bei Eingabewerten zu verschiedenen Zeitpunkten für die programmierbare Logiksteuerung zu speichern, und
einen Prozessor (12), der von demselben Simulator dafür konfiguriert ist, die Reaktion der programmierbaren Logiksteuerung auf die Veränderungen der Eingabewerte in Echtzeit durch Emulieren von Firmware der programmierbaren Logiksteuerung zu simulieren, wobei der Prozessor (12) zum Ausführen der folgenden Schritte vorgesehen ist:
a) Aktivieren (30) eines Simulators der programmierbaren Logiksteuerung,
b) Bereitstellen (32) von Simulationseingaben als eine Funktion der Zeit für die programmierbare Logiksteuerung, wobei das Bereitstellen der Simulationseingaben Teil des Simulators ist, und
c) Simulieren (38) einer Reaktion der programmierbaren Logiksteuerung im Zeitverlauf auf die Simulationseingaben als eine Funktion der Zeit durch Emulieren von Firmware der programmierbaren Logiksteuerung, wobei die Eingabesimulation Folgendes umfasst:
Erzeugen einer grafischen Benutzerschnittstelle mit Sensor- und Sollwerteingabeoptionen, einschließlich eines Sensormesswertes, der die simulierte PLC betrifft, auf einer Anzeige,
Empfangen einer Sequenz von Sollwerten, Sensormesswerten oder Sollwerten und Sensormesswerten von den Eingabeoptionen der grafischen Benutzerschnittstelle, einschließlich eines Wertes der Sensormessung der simulierten PLC, mit einem Prozessor, wobei die Sequenz eine Zeitplanung beinhaltet,
Simulieren eines Betriebes der programmierbaren Logiksteuerung als eine Funktion der Sequenz mit dem Prozessor, wobei der Betrieb in Echtzeit simuliert wird, und
Anzeigen einer Angabe des Betriebes in Echtzeit während des Simulierens auf der Anzeige, wobei
die Simulation die PLC-Reaktion im Zeitverlauf auf die Veränderungen bei einer oder mehreren simulierten Eingaben der Eingabezeitsequenz bestimmt und Steuerausgaben der PLC bestimmt, wobei die Zeitsequenz als eine Sequenz einzelner Zeitschritte definiert ist und wobei Steuerungsausgabewerte der Steuerungsausgaben in den einzelnen Zeitschritten bestimmt und angezeigt werden, wobei ein Fehlen eines Wertes oder ein unerwarteter Wert eine Störung angibt.

## Revendications

1. Procédé de simulation automatisée d'entrées lors de la simulation d'un automate programmable, AP, le procédé comportant les étapes consistant à :
a) générer (34), sur un affichage, une interface graphique d'utilisateur dotée d'options d'entrée de capteurs et de points de consigne ;
b) recevoir (36), à l'aide d'un processeur (12), une séquence chronologique de points de consigne, d'indications de capteurs, ou de points de consigne et d'indications de capteurs à partir des options d'entrée de l'interface graphique d'utilisateur, la séquence chronologique comprenant un minutage ;
c) simuler (38), à l'aide du processeur (12), le fonctionnement de l'automate programmable en fonction de la séquence chronologique, le fonctionnement étant simulé en temps réel d'après le minutage en émulant un microprogramme de l'automate programmable ; et
d) afficher (40), sur l'affichage, une indication du fonctionnement en temps réel pendant la simulation (38) ;
e) la simulation déterminant la réponse de l'AP au fil du temps aux évolutions d'une ou de plusieurs entrées simulées de la séquence chronologique d'entrées et déterminant des sorties de commande de l'AP, la séquence chronologique étant définie comme une séquence de pas de temps discrets et des valeurs de sorties de commande des sorties de commande étant déterminées et affichées aux pas de temps discrets, l'absence d'une valeur ou une valeur inattendue indiquant un bogue.

2. Procédé selon la revendication 1, la génération (34), la réception (36), la simulation (38) et l'affichage (40) étant présentés sans discontinuité à un utilisateur comme un seul programme.

3. Procédé selon la revendication 1, l'intégration de la génération (34), de la réception (36), de la simulation (38) et de l'affichage (40) dans le même processus comportant la réalisation de la génération (34), de la réception (36), de la simulation (38) et de l'affichage (40) comme un fil unique d'un programme.

4. Procédé selon la revendication 1, la génération (34) comportant l'affichage (40) des options d'entrée comme des emplacements multiples, les emplacements étant étiquetés comme se rapportant à un instant, et une valeur d'une variable se rapportant à l'instant, ou
la génération (34) d'au moins une des options d'entrée en tant que mesure de capteur, et la réception (36) comportant la réception (36) de la mesure de capteur comme une des indications de capteurs, ou
la génération (34) comportant la génération (34) d'au moins une des options d'entrée en tant qu'affectation de point de consigne, et la réception (36) comportant la réception (36) de l'affectation de point de consigne comme un des points de consigne.

5. Procédé selon la revendication 1, la réception (36) comportant la réception (36) du minutage comme des instants de variations des points de consigne, des indications de capteurs, ou des points de consigne et des indications de capteurs, les instants étant spécifiés par un utilisateur.

6. Procédé selon la revendication 1, la simulation (38) comportant la simulation (38), à l'aide du processeur (12) d'un ordinateur, d'un microprogramme spécifique à un type de l'automate programmable, ou
la simulation (38) d'une réaction de l'automate programmable à la séquence des points de consigne, des indications de capteurs, ou des points de consigne et des indications de capteurs, ou
la modification des points de consigne, des indications de capteurs, ou des points de consigne et des indications de capteurs en fonction du minutage et la détermination d'une valeur calculée, à l'aide du processeur (12), simulant (38) le fonctionnement de l'automate programmable.

7. Procédé selon la revendication 1, la réception (36) comportant le stockage des points de consigne, des indications de capteurs, ou des points de consigne et des indications de capteurs dans une première section d'une mémoire (14), et la simulation (38) comportant la simulation (38) d'une lecture à partir de fils et d'une lecture à partir d'un stockage de mesures, la lecture à partir des fils accédant à la première section de la mémoire (14), la première section étant distincte de la simulation du stockage de mesures.

8. Procédé selon la revendication 1, la réception (36) comportant la mise en tampon des points de consigne, des indications de capteurs, ou des points de consigne et des indications de capteurs comme une tâche, et la simulation (38) comportant la simulation (38) à partir de la tâche mise en tampon.

9. Procédé selon la revendication 1, la réception (36) comportant la réception (36) des indications de capteurs comme une oscillation à une fréquence, et la simulation (38) comportant la simulation (38) du fonctionnement en réponse à l'oscillation.

10. Procédé selon la revendication 1, l'affichage (40) comportant l'affichage (40) de différentes valeurs d'une variable réagissant aux points de consigne, aux indications de capteurs, ou aux points de consigne et aux indications de capteurs en temps réel.

11. Procédé selon la revendication 1 comportant en outre l'enregistrement (42) de l'indication au fil du temps pendant la simulation (38) et la sortie de l'indication au fil du temps dans une table récapitulative après la simulation (38).

12. Support de stockage non transitoire lisible par ordinateur dans lequel sont stockées des données représentant des instructions exécutables par un processeur (12) programmé pour une simulation automatisée d'entrées lors de la simulation (38) d'un automate programmable, le support de stockage comportant des instructions destinées à :
a) activer (30) un simulateur de l'automate programmable ;
b) fournir (32) des entrées de simulation en fonction du temps pour l'automate programmable, la fourniture des entrées de simulation faisant partie du simulateur ; et
c) simuler (38) une réponse de l'automate programmable au fil du temps aux entrées de simulation en fonction de temps en émulant un microprogramme de l'automate programmable ; la simulation d'entrées comportant les étapes consistant à :
générer, sur un affichage, une interface graphique d'utilisateur dotée d'options d'entrée de capteurs et de points de consigne incluant une mesure de capteur se rapportant à l'AP en cours de simulation ;
recevoir, à l'aide d'un processeur, une séquence de points de consigne, d'indications de capteurs, ou de points de consigne et d'indications de capteurs à partir des options d'entrée de l'interface graphique d'utilisateur incluant une valeur de la mesure de capteur de l'AP en cours de simulation, la séquence comprenant un minutage ;
simuler, à l'aide du processeur, le fonctionnement de l'automate programmable en fonction de la séquence, le fonctionnement étant simulé en temps réel ; et
afficher, sur l'affichage, une indication du fonctionnement en temps réel pendant la simulation ;
la simulation déterminant la réponse de l'AP au fil du temps aux évolutions d'une ou de plusieurs entrées simulées de la séquence chronologique d'entrées et déterminant des sorties de commande de l'AP, la séquence chronologique étant définie comme une séquence de pas de temps discrets et des valeurs de sorties de commande des sorties de commande étant déterminées et affichées aux pas de temps discrets, l'absence d'une valeur ou une valeur inattendue indiquant un bogue.

13. Support de stockage non transitoire lisible par ordinateur selon la revendication 12, la fourniture (32) comportant la génération (34) d'une interface graphique d'utilisateur dotée d'emplacements pour l'introduction des entrées par un utilisateur, et la fourniture et la simulation (38) étant effectuées comme une même instance du simulateur.

14. Support de stockage non transitoire lisible par ordinateur selon la revendication 12, la simulation (38) comportant la simulation (38) de la réponse en temps réel ou l'automate programmable obtenant les entrées de simulation à partir de la lecture de fils et à partir de la lecture d'un stockage d'entrées.

15. Système de simulation (38) d'un automate programmable, le système comportant :
une mémoire (14) configurée par un simulateur pour stocker des variations dans des valeurs d'entrées à différents instants pour l'automate programmable ; et
un processeur (12) configuré par le même simulateur pour simuler en temps réel une réaction de l'automate programmable aux variations des valeurs d'entrées en émulant un microprogramme de l'automate programmable, le processeur (12) servant à réaliser les étapes suivantes :
a) activation (30) d'un simulateur de l'automate programmable ;
b) fourniture (32) d'entrées de simulation en fonction du temps pour l'automate programmable, la fourniture des entrées de simulation faisant partie du simulateur ; et
c) simulation (38) d'une réponse de l'automate programmable au fil du temps aux entrées de simulation en fonction de temps en émulant un microprogramme de l'automate programmable ; la simulation d'entrées comportant les étapes consistant à :
générer, sur un affichage, une interface graphique d'utilisateur dotée d'options d'entrée de capteurs et de points de consigne incluant une mesure de capteur se rapportant à l'AP en cours de simulation ;
recevoir, à l'aide d'un processeur, une séquence de points de consigne, d'indications de capteurs, ou de points de consigne et d'indications de capteurs à partir des options d'entrée de l'interface graphique d'utilisateur incluant une valeur de la mesure de capteur de l'AP en cours de simulation, la séquence comprenant un minutage ;
simuler, à l'aide du processeur, le fonctionnement de l'automate programmable en fonction de la séquence, le fonctionnement étant simulé en temps réel ; et
afficher, sur l'affichage, une indication du fonctionnement en temps réel pendant la simulation ;
la simulation déterminant la réponse de l'AP au fil du temps aux évolutions d'une ou de plusieurs entrées simulées de la séquence chronologique d'entrées et déterminant des sorties de commande de l'AP, la séquence chronologique étant définie comme une séquence de pas de temps discrets et des valeurs de sorties de commande des sorties de commande étant déterminées et affichées aux pas de temps discrets, l'absence d'une valeur ou une valeur inattendue indiquant un bogue.
